**Europäisches Patentamt**

**European Patent Office**

**Office européen des brevets**

(19)

(11) Publication number : **0 228 979 B1**

(12) # EUROPEAN PATENT SPECIFICATION

(45) Date of publication of patent specification :
05.04.95 Bulletin 95/14

(51) Int. Cl.⁶ : **G01N 15/05, B01L 3/02**

(21) Application number : **86500006.1**

(22) Date of filing : **16.12.86**

(54) Arrangement for determining blood celle sedimentation rate.

(30) Priority : **19.12.85 ES 291154 U**

(43) Date of publication of application :
**15.07.87 Bulletin 87/29**

(45) Publication of the grant of the patent :
**05.04.95 Bulletin 95/14**

(84) Designated Contracting States :
**AT CH DE FR IT LI NL**

(56) References cited :
**EP-A- 0 013 614
EP-A- 0 024 705
EP-A- 0 108 724
DE-A- 2 736 390
DE-A- 3 421 955**

(73) Proprietor : **Xalabarder Miramanda, Fernando
Pau Casals 8-10
E-08140 Caldes de Montbui (ES)**

(72) Inventor : **Xalabarder Miramanda, Fernando
Pau Casals 8-10
E-08140 Caldes de Montbui (ES)**

(74) Representative : **Curell Sunol, Marcelino
c/o Dr. Ing. M. Curell Sunol I.I. S.L.
Agentes de la Propiedad Industrial
Passeig de Gràcia 65 bis
E-08008 Barcelona (ES)**

## Description

### BACKGROUND OF THE INVENTION

#### FIELD OF THE INVENTION

The present invention relates to an arrangement for determining the blood cell sedimentation rate, comprising a standardised graduated pipette having a volume $V_1$, with a free lower end and an upper; a resilient plunger sealingly engaged with the outside of the pipette and having an active edge; and a tube having a closed bottom end, a height $\underline{h}$ and an inside diameter $\underline{d}$, the tube being adapted to contain the blood to be analysed, the inside diameter $\underline{d}$ of the tube being generally the same as the outside diameter of said active edge of the plunger, such that the latter is adapted to slide within said tube while being sealingly engaged therewith.

### DESCRIPTION OF THE PRIOR ART

European Patent Application 0 108 724 discloses an apparatus for measuring the rate of erythrosedimentation of blood comprising a test tube having a perfectly cylindrical part, in which a graduated and calibrated tube or pipette may penetrate, the external diameter of which is such that it will slide and seal along the cylindrical part of the test tube. The volume of the cylindrical part and that of the pipette are substantially the same.

The apparatus functions as follows: the test tube is filled with an anticoagulant and with the blood to be analysed; the pipette is then inserted in the cylindrical part and consequently the blood will rise up inside said pipette which is provided with a device to receive any excess blood and maintain a constant blood level, independently of the care taken in filling the test tube with the blood.

The operation is simple, although the apparatus has the drawback that it requires a high degree of perfection in forming the outer surface of the pipette and the inner surface of the cylindrical part of the test tube. Also, the fact that the diameters have to be the same means either that the cylindrical portion has to be narrow, making it difficult to obtain a good mixture of the anticoagulant with the blood or that it has to be broad, which means that the pipette will be unnecessarily broad and, therefore, antieconomical.

It should be pointed our that the apparatus is based on the existence of a cylindrical part that determines, with a very close approximation and possibly with a small excess, the volume of blood required by the internal volume of the pipette; this is shown on page 5 lines 5-8: "... the blood whichs flows into the calibrated pipette is always the same volume as the internal portion PC[1] thanks to the continous seal of the pipette along the portion PC[1]." Therefore, the apparatus is based on a special configuration of the test tube, that has a previously calibrated portion (the part PC[1]).

German Patent Application 27 36 390 discloses a device for the same purpose, which also comprises a test tube and a pipette, although the latter is provided with a resilient plunger, whereby the outer diameter of the pipette does not have to be substantially the same as the inside diameter of the test tube. Nevertheless, this device has the drawback that the plunger is located at the end of the pipette and, therefore, (a) if the pipette is only inserted to the extent that it becomes full, it requires a laborious, long operation; if (b) the pipette is inserted in the test tube to the bottom thereof, all the blood contained in the test tube is forced into the pipette and, therefore, to carry out the analysis, the blood placed in the test tube has to be previously laboriously measured; also, the situation of the plunger at the end of the pipette requires a long movement of the pipette and plunger, which involves a lengthy operation and, furthermore, this long stroke may cause the formation of bubbles of air interrupting the blood column formed in the pipette and this falsifies the result of the analysis.

European Patent Application No. 0 024 705 discloses a device for determining the sedimentation rate of blood cells; the sedimentation tube 3 is hermetically and partially wrapped by the moveable capsule 2, and the whole formed by both elements is introduced in the mouth of the tubular container 1, until the lower end of the sedimentation tube 3 reaches the bottom of the tubular container 1, whereby part of the blood contained in the tubular container 1, flows up the sedimentation tube 3: subsequently, it is necessary to adjust the blood level to the height of the calibration mark 4. This device has the drawback of requiring a special attention from the user when performing the fitting.

### SUMMARY OF THE INVENTION

The determination of the blood cell sedimentation rate is based on obtaining a relatively very accurate amount of blood. It is an object of the invention to allow this requirement to be fulfilled in a fast, convenient and reliable way.

To attain such object an arrangement of the type described above has been devised and is characterized in that said pipette is provided with a levelling device of volume $V_2$ adapted to receive and retain any excess blood forced into said pipette; and in that the plunger is correctly positioned at a fixed relation to the pipette at a distance $\underline{a}$ between the active edge of the plunger and the free lower end of the pipette; said distance $\underline{a}$ fulfils the following relationship:

$$V_1 \leqq (\pi/4)\, d^2\, (h - a) \leqq V_1 + V_2$$

whereby the cylindrical space of height $\underline{e}$, generally

equivalent to h-a and covered inside the tube until the free lower end of the pipette abuts the closed bottom end of the tube, corresponds to a volume of blood expelled from the tube capable of filling the pipette without overfilling the unit formed by the said pipette and the levelling device.

## BRIEF DESCRIPTION OF THE DRAWINGS

To facilitate the understanding of the foregoing, reference is made hereinafter to the accompanying drawings which, in view of their explanatory nature, are to be deemed to be lacking is any limitative nature relative to the scope of legal protection being applied for. In the drawings:

Figure 1 is an axial sectional view of the whole arrangement, comprising pipette, plunger and tube in the position corresponding to the start of insertion of the plunger in the tube; and

Figure 2 is a cross sectional view similar to Figure 1 but corresponding to the position of maximum insertion, in which the end of the pipette reaches the bottom of the tube.

## DETAILED DESCRIPTION OF THE INVENTION

As is well known, the test or analysis for determining the blood cell sedimentation rate uses as the most important element thereof a standardised graduated pipette 1. Said pipette has a capacity $V_1$ of about 1 cubic centimetre and is graduated along a scale the start 2 of which is at the top end 3.

The pipette is filled with blood up to the start of the scale, is closed at the bottom end and is allowed to rest in a vertical position. The red blood cells settle out in the plasma and a reading of the sediment level is taken at appropriate time intervals, providing thereby the necessary data for the determination of the blood sedimentation rate.

Certain difficulties arise for filling the pipette 1 exactly up to the start 2 of the scale, whereby the top end or portion 3 is frequently provided with a levelling device 4 (which may adopt different forms) for receiving and retaining any excess blood forced into the pipette.

The levelling device 4 shown in the drawings is described without any limitative condition. It is provided with means 4a for attachment thereof to the pipette 1; a transverse wall 5 having a ball 6 forming a valve allows blood to be drawn into the chamber 7 of volume $V_2$. This chamber is closed at the top end thereof with a stopper 8 having a breather passage 9, such that the pipette 1 may be filled with blood, together with a small excess amount occupying the chamber 7, by suction, pressure or any other system. At the end of the filling operation, the blood in the chamber is retained by the valve 5, 6, whereby it does not participate in the sedimentation taking place in the pipette itself.

From the foregoing, there is gathered the advantage represented by the use of the levelling device 4, since the need of an extreme accuracy on filling the pipette 1 is avoided.

Furthermore, it is also frequent not to use suction for filling the pipette; for this purpose, there is known the use of a resilient plunger 10 sealingly engaged around the outside of the pipette 1. When the plunger 10 is inserted in a tube 11, it acts as a piston to displace part of the blood 12 contained in the tube towards the pipette.

Notwithstanding, in the known prior art, one has to pay close attention when inserting the plunger, to make sure that it is not inserted too little (whereby the pipette would not be filled), nor too much, in which case the pipette and levelling device 4 would be filled, with blood overflowing through the breather passage 9.

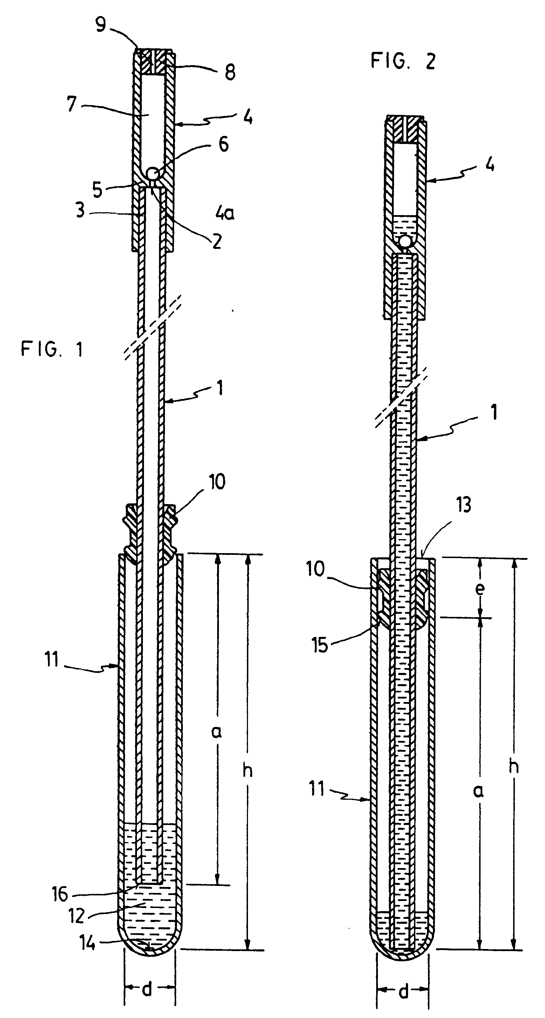

To ensure a rapid, reliable performance of this operation is an object of the invention. The height of the tube 11 is h, comprised between the open end 13 and the bottom end 14; d is the inside diameter of the tube and is substantially the same as the outside diameter of the plunger 10; a is the distance between the active lower edge 15 of the plunger and the free lower end 16 of the pipette; and e is the distance covered by the plunger 10 in the tube, from its insertion therein (Figure 1) until the lower end 16 of the pipette abuts the bottom end 14 of the tube (Figure 2).

It is to be appreciated that e (Figure 2) is substantially the same as the difference between the height h and the distance a, since the space remaining between the end 16 (in the position of maximum insertion of the pipette) and the bottom end 14 is negligible, due to the curving of the tube.

According to the invention, the plunger 10 is placed in such a way that the distante a between the active lower edge 15 and the end 16 of the pipette is such as to meet the following expression:

$$V_1 \leq (\pi/4)\ d^2\ (h - a) \leq V_1 + V_2$$

Since e is the same as h-a, the distance covered by the plunger 10 within the tube 11 corresponds to a cylindrical volume equal to:

$$(\pi/4)\ d^2 e$$

whereby (ignoring insignificant questions of air compression), if such volume is the same as or greater than $V_1$ (i.e. the volume of the pipette), such displacement is sufficient to fill the pipette; furthermore, such volume is less than or equal to $V_1 + V_2$, whereby such displacement is incapable of filling the pipette 1 plus the levelling device 4, thereby preventing an overflow of blood through the breather passage 9.

The above described arrangement provides a convenient, rapid, reliable system for preparing blood cell sedimentation rate determinations. The extracted blood sample is placed in a tube 11; a pipette 1 having a correctly positioned plunger 10 and of the necessary diameter is inserted in the tube; when the end 16 of the pipette abuts the bottom end 14 of the tube, the pipette has been filled adequately. Then, the arrangement, i.e. the ensemble of tube and pipette, is placed in a vertical position and everything is adequately prepared for the blood cell sedimentation rate determination.

## Claims

1. An arrangement for determining the blood cell sedimentation rate, comprising a standardised graduated pipette (1) having a volume $V_1$, with a free lower end (16) and an upper end (3); a resilient plunger (10) sealingly engaged with the outside of the pipette (1) and having an active edge (15); and a tube (11) having a closed bottom end (14), a height $h$ and an inside diameter $d$, the tube being adapted to contain the blood to be analysed, the inside diameter $d$ pf the tube (11) being generally the same as the outside diameter of said active edge (15) of the plunger (10), such that the latter is adapted to slide within said tube (1) while being sealingly engaged therewith, characterized in that said pipette (1) is provided with a levelling device (4) of volume $V_2$ adapted to receive and retain any excess blood forced into said pipette (1); and in that the plunger (10) is correctly positioned at a fixed relation to the pipette at a distance $a$ between the active edge (15) of the plunger (10) and the free lower end (16) of the pipette (1); said distance $a$ fulfils the following relationship:

$$V_1 \leqq (1/4) \pi d^2 (h - a) \leqq V_1 + V_2$$

whereby the cylindrical space of height $e$, generally equvalent to $h$-$a$ and covered inside the tube (11) until the free lower end (16) of the pipette (1) abuts the closed bottom end (14) of the tube (11), corresponds to a volume of blood expelled from the tube (11) capable of filling the pipette (1) without overfilling the unit formed by the said pipette (1) and the levelling device (4).

## Patentansprüche

1. Vorrichtung zur Bestimmung der Blutzellensedimentationsrate, mit einer standardisierten Meßpipette (1) mit einem Volumen $V_1$, mit einem freien unteren Ende (16) sowie einem oberen Ende (3); mit einem elastischen Kolben (10), der abdichtend mit der Außenseite der Pipette (1) zusammenwirkt und der eine aktive Kante (15) hat; und mit einer Röhre (11) mit einem geschlossenen unteren Ende (14), einer Höhe $h$ und einem Innendurchmesser $d$, wobei die Röhre angelegt ist, um das zu analysierende Blut aufzunehmen, wobei der Innendurchmesser $d$ der Röhre (11) im wesentlichen der gleiche ist wie der Außendurchmesser der aktiven Kante (15) des Kolbens (10), so daß der letztere angepaßt ist, um innerhalb der genannten Röhre (1) zu gleiten, während er in abdichtendem Eingriff mit dieser steht, **dadurch gekennzeichnet**, daß die Pipette (1) mit einer Ausgleichseinrichtung (4) mit einem Volumen $V_2$ versehen ist, die so angelegt ist, um überschüssiges Blut aufzunehmen und zurückzuhalten, das in die genannte Pipette (1) gepreßt wird; und daß der Kolben (10) korrekt in einer festen Relation zur Pipette, mit einem Abstand $a$ zwischen der aktiven Kante (15) des Kolbens (10) und dem freien unteren Ende (16) der Pipette (1) angeordnet ist; wobei dieser Abstand $a$ das folgende Verhältnis erfüllt

$$V_1 \leqq (1/4) \pi d^2 (h - a) \leqq V_1 + V_2$$

wobei der zylindrische Raum der Höhe $e$, der im allgemeinen äquivalent zu $h$-$a$ ist und von der Röhre (11) bedeckt wird bis das freie untere Ende (16) der Pipette (1) an das geschlossene untere Ende (14) der Röhre (11) stößt, einem Volumen von Blut entspricht, welches aus der Röhre (11) herausgedrückt wird, wobei es in der Lage ist, die Pipette (1) zu füllen, ohne die Einheit zu überfüllen, die durch die Pipette (1) und die Ausgleichseinrichtung (4) gebildet ist.

## Revendications

1. Dispositif pour déterminer la vitesse de sédimentation de cellules sanguines, comportant une pipette graduée normalisée (1) ayant un volume $V_1$, une extrémité inférieure (16) et une extrémité supérieure (3) libres, un piston plongeur élastique (10) en contact de manière étanche avec la partie extérieure de la pipette (1) et ayant un bord actif (15), et un tube (11) ayant une extrémité formant fond fermé (14), une hauteur $h$ et un diamètre intérieur $d$, le tube étant adapté pour contenir le sang à analyser, le diamètre intérieur $d$ du tube (11) étant de manière générale le même que le diamètre extérieur dudit bord actif (15) du piston plongeur (10), de telle sorte que ce dernier soit adapté pour coulisser à l'intérieur dudit tube (11) tout en étant en contact de manière étanche avec celui-ci, caractérisé en ce que ladite pipette (1) est munie d'un dispositif de mise à niveau (4) de volume $V_2$ adapté pour recevoir et retenir tout sang en excès poussé à l'intérieur de ladite pipette (1), et en ce que le piston plongeur (10) est positionné correctement, en ayant une relation fixe par rapport à la pipette, à une distance $a$ entre le bord actif (15) du piston plongeur (10) et l'extrémité inférieure libre (16) de la pipette (1), ladite distance $\underline{a}$ satisfaisant la relation suivante :

$$V_1 \leqq (\pi/4) \, d^2 \, (h - a) \leqq V_1 + V_2$$

de sorte que l'espace cylindrique de hauteur $\underline{e}$, de manière générale équivalente à $\underline{h}$ - $\underline{a}$, parcourue à l'intérieur du tube (11) jusqu'à ce que l'extrémité inférieure libre (16) de la pipette (1) vienne en butée contre l'extrémité formant fond fermé (14) du tube (11), correspond à un volume de sang expulsé à partir du tube (11) capable de remplir la pipette (1) sans déborder de l'ensemble formé par ladite pipette (1) et le dispositif de mise à niveau (4).

FIG. 1

FIG. 2